# EUROPÄISCHE PATENTSCHRIFT

(11) **EP 3 555 738 B1**
(45) Veröffentlichungstag und Bekanntmachung des Hinweises auf die Patenterteilung: **09.08.2023**
(21) Anmeldenummer: 17797922.6
(22) Anmeldetag: 08.11.2017
(51) Int. Cl.: G06F 3/14, G09G 5/02

(54) **VERFAHREN ZUM ÜBERPRÜFEN EINER GÜLTIGKEIT VON BILDDATEN**
METHOD FOR VERIFYING A VALIDITY OF IMAGE DATA
PROCÉDÉ DE CONTRÔLE D'UNE VALIDITÉ DE DONNÉES D'IMAGE

(30) Priorität: 16.12.2016 DE 102016225349
(43) Veröffentlichungstag der Anmeldung: 23.10.2019
(73) Patentinhaber: Robert Bosch GmbH, 70442 Stuttgart (DE)
(72) Erfinder: HODRI, Siegfried, 70569 Stuttgart (DE)
(86) Internationale Anmeldenummer: PCT/EP2017/078626
(87) Internationale Veröffentlichungsnummer: WO 2018/108395

(56) Entgegenhaltungen:
- EP-A1- 1 986 130
- EP-A1- 2 779 151
- WO-A1-2015/008104
- DE-A1-102007 048 608

## Beschreibung

### Stand der Technik

Die Erfindung betrifft ein Verfahren zum Überprüfen einer Gültigkeit von Bilddaten.

Aus der DE 10 2007 048 608 A1 ist eine Testeinrichtung zur Prüfung der Gültigkeit auf ein vorgegebenes Bild bezogenen Anzeigesignalen bekannt, mit einer Einrichtung zum Ermitteln von Bilddaten aus den Anzeigesignalen, mit einer Einrichtung zum Bestimmen eines Prüfwerts der Bilddaten und mit einer Vergleichereinheit zum Vergleich des ermittelten Prüfwerts mit einem auf das Bild bezogenen, gespeicherten Prüfwert, wobei für den Fall, dass die beiden Prüfwerte übereinstimmen, eine Gültigkeit der Anzeigesignale festgestellt wird.

### Offenbarung der Erfindung

Die Erfindung betrifft ein Verfahren zum Überprüfen einer Gültigkeit von Bilddaten, wobei die Bilddaten einer Anzeigevorrichtung zugeordnet sind. Die Bilddaten werden abhängig von einem Farbwert der in mindestens zwei Gruppen eingeteilt, wobei aus den Bilddaten mindestens einer Gruppe ein Prüfwert für die jeweilige Gruppe ermittelt wird. Der ermittelte Prüfwert einer Gruppe wird mit einem vorgegebenen Prüfwert der jeweiligen Gruppe verglichen. Eine Gültigkeit der Bilddaten wird nur dann festgestellt, wenn der ermittelte Prüfwert der jeweiligen Gruppe und der vorgegebene Prüfwert der jeweiligen Gruppe übereinstimmen. Eine Ungültigkeit der Bilddaten wird dann festgestellt, wenn der ermittelte Prüfwert der jeweiligen Gruppe und der vorgegebene Prüfwert der jeweiligen Gruppe nicht übereinstimmen.

Unter Bilddaten kann eine Menge von einzelnen digitalen Datenwerten verstanden werden, die jeweils Bildwerte für einzelne Pixel einer Anzeige angeben. Im RGB-Format kann eine Menge von Bilddaten eine Menge von Daten sein, die jeweils für die einzelnen Farben einen Helligkeitswert angeben.

Das Verfahren zur Überprüfung einer Gültigkeit von Bilddaten hat den Vorteil, dass bei einer Übertragung von Bilddaten, beispielsweise an eine Anzeigevorrichtung und/oder an ein Display, auftretende Fehler festgestellt werden können. So kann gewährleistet werden, dass die richtigen Informationen auf einem Display angezeigt werden, was insbesondere bei sicherheitsrelevanten Informationen, beispielsweise bei Warnsymbolen, von großer Bedeutung ist. Insbesondere ist das Verfahren bei einem Einsatz in einem Kraftfahrzeug von Vorteil, da bei derartigen Anzeigen eine korrekte Anzeige von Informationen, beispielsweise Warnsignalen und/oder Schrift bzw. Buchstaben, wichtig ist.

Durch die Einteilung der Bilddaten in mindestens zwei Gruppen kann der Prüfwert für eine Gruppe jeweils aus den Bilddaten der jeweiligen Gruppe berechnet werden. Hierdurch wird das Verfahren sicherer, einfacher und kann aufgrund einer reduzierten Datenmenge zur Überprüfung schneller durchgeführt werden, wodurch Rechnerkapazität eingespart werden kann.

Ein weiterer Vorteil ist, dass das Verfahren insbesondere auch zur Überprüfung von Symbolen, beispielsweise Warnsymbolen auf einem animierten Hintergrund verwendet werden kann. Verändert sich beispielsweise ein Bereich hinter einem Symbol, kann aufgrund der Einteilung in mindestens zwei Gruppen gewährleistet werden, dass das Symbol erkannt wird und mittels des Verfahrens eine Gültigkeit der Bilddaten überprüft werden kann.

Erfindungsgemäß werden einer ersten Gruppe der Bilddaten alle Bilddaten mit einem maximalen Farbwert zugeteilt. Hierdurch kann gewährleistet werden, dass beispielsweise alle Bilddaten der ersten Gruppe zugeteilt werden, die zum Darstellen eines Symbols verwendet werden, beispielsweise alle Bilddaten eines Warmsymbols und/oder einer Schrift bzw. Buchstaben, welche mittels eines maximalen Farbwerts und/oder mit einem maximalen Helligkeitswert dargestellt werden.

Erfindungsgemäß werden einer zweiten Gruppe der Bilddaten alle Bilddaten mit einem Farbwert zwischen einer ersten vorgegebenen Grenze eines maximalen Farbwerts und einer zweiten vorgegebenen Grenze einer Schwelle eines Farbwerts zugeteilt. Vorteilhafterweise werden der zweiten Gruppen die Bilddaten zugeteilt, die am Rand eines Symbols, beispielsweise eines Warnsymbols liegen, und nicht den maximalen Farbwert und oder den maximalen Helligkeitswert aufweisen. Diese Bilddaten am Rand eines Symbols werden insbesondere zur Glättung des Farbübergangs und/oder des Helligkeitsübergangs zwischen einem Symbol und einem Hintergrund verwendet.

Ferner werden vorteilhafterweise einer dritten Gruppe der Bilddaten alle Bilddaten mit einem Farbwert und/oder einem Helligkeitswert unterhalb und/oder gleich einer Schwelle eines Farbwerts und/oder eines Helligkeitswerts zugeteilt. Insbesondere sind die Bilddaten in dieser Gruppe gegenüber einem dargestellten Symbol dunklere Bereiche, vorzugsweise der Hintergrund des Symbols. Da hier eine Schwelle eines Farbwerts und/oder eine Helligkeitswert betrachtet wird, können vorteilhafterweise auch animierte Bilddaten bzw. Hintergründe in diese Gruppe eingeteilt werden. Ein animierter Hintergrund kann beispielsweise eine Karte einer Navigation und/oder ein umschaltbares Hintergrundbild der Anzeigevorrichtung sein. Weiterhin kann die Schwelle vorzugsweise in Abhängigkeit des Helligkeitswerts definiert werden, wobei die Schwelle zwischen 25% und 50% des maximalen Helligkeitswerts der Bilddaten beträgt. Ferner kann die Schwelle vorzugsweise in Abhängigkeit des Farbwerts definiert werden, wobei die Schwelle zwischen 25% und 50% des maximalen Farbwerts der Bilddaten beträgt.

In einer Ausführungsform wird der Prüfwert einer Gruppe ermittelt, indem die Anzahl aller Bilddaten einer Gruppe ermittelt wird. Der Vorteil der Summierung aller Bilddaten einer Gruppe liegt darin, dass das Verfahren einfach, schnell und sicher durchgeführt werden kann, wobei ein geringer Aufwand erforderlich ist. Hierbei kann der Rechenbedarf sowie die benötigte Speicherkapazität gering gehalten werden.

Eine vorteilhafte Ausgestaltung sieht vor, dass der Prüfwert einer Gruppe ermittelt wird, indem ein Mittelwert eines Farbwerts der Bilddaten und/oder eines Helligkeitswerts der Bilddaten und/oder eine Standardabweichung aus den Positionen der Bilddaten einer Gruppe ermittelt wird. Hierdurch kann ein statistisches Maß für die Streuung der Bilddaten und/oder der Schwerpunkt der Bilddaten berechnet werden. Die Berechnung benötigt geringen Rechenbedarf bzw. geringe Speicherkapazitäten.

In einer Weiterentwicklung wird der Prüfwert für eine erste Gruppe und eine zweite Gruppe ermittelt, wobei eine Gültigkeit der Bilddaten nur dann festgestellt wird, wenn der ermittelte Prüfwert der ersten Gruppe und ein vorgegebener Prüfwert der ersten Gruppe sowie der ermittelte Prüfwert der zweiten Gruppe und ein vorgegebener Prüfwert der zweiten Gruppe übereinstimmen. Hierdurch kann die Robustheit und die Sicherheit des Verfahrens gewährleistet werden. Durch die Überprüfung von Prüfwerten mindestens zweier Gruppen können vorteilhafterweise Fehler einfacher und/oder schneller festgestellt werden.

Weiterhin können insbesondere Bilddaten eines definierten Bereichs auf einer Anzeigevorrichtung zum Überprüfen der Gültigkeit der Bilddaten des definierten Bereichs auf der Anzeigevorrichtung herangezogen werden. Hierdurch kann beispielsweise lediglich der Bereich dann auf einer Anzeigevorrichtung überprüft werden, auf welchem die zu überprüfenden Bilddaten angezeigt werden sollen, zum Beispiel in dem Bereich in welchem das angezeigte Symbol erwartet wird. Das Verfahren kann durch die reduzierte Datenmenge schneller und sicherer durchgeführt werden, wobei Rechenkapazität und/oder Speicherkapazität eingespart werden können. Ferner kann gewährleistet werden, dass das Verfahren durch weitere Symbole auf der Anzeigevorrichtung verfälscht wird.

In einer Weiterentwicklung kann zum Abfangen von Toleranzen eine Gültigkeit und/oder eine Ungültigkeit der Bilddaten dann festgestellt werden, wenn der ermittelte Prüfwert einer Gruppe einen bestimmten Prozentsatz von dem vorgegebenen Prüfwerte der jeweiligen Gruppe abweicht. Beispielsweise kann eine Gültigkeit der Bilddaten dann festgestellt werden, wenn der ermittelte Prüfwert einer Gruppe weniger als 5 % bis 30 %, insbesondere 10 %, von dem vorgegebenen Prüfwert der jeweiligen Gruppe abweicht und/oder eine Ungültigkeit der Bilddaten dann festgestellt werden wenn der ermittelte Prüfwert einer Gruppe mehr als 5 % bis 30 %, insbesondere 10 %, von dem vorgegebenen Prüfwert der jeweiligen Gruppe abweicht. Hierdurch kann gewährleistet werden, dass einzelne Bildpunkte Darstellungsfehler aufweisen dürfen, ohne dass eine Fehlermeldung generiert und/oder das Display wegen eines einzelnen fehlerhaften Bildpunktes abgeschaltet wird.

In einer vorteilhaften Ausführung wird eine Fehlermeldung und/oder ein Interrupt generiert, wenn die Gültigkeit der Bilddaten nicht festgestellt wird. Beispielsweise kann eine Anzeigevorrichtung zur Anzeige der Bilddaten zumindest teilweise oder ganz abgeschaltet werden, wenn die Gültigkeit der Bilddaten nicht festgestellt wird und/oder wenn eine Fehlermeldung generiert wird. Hierdurch kann gewährleistet werden, dass ein Betrachter, beispielsweise ein Fahrer eines Fahrzeugs und/oder Beifahrer, nicht durch fehlerhaft dargestellte Informationen und/oder Bilder gestört oder falsch informiert wird. Bei einer Abschaltung kann beispielsweise die Beleuchtung der Anzeigevorrichtung abgeschaltet und/oder die Darstellung von Bilddaten unterbrochen werden, zum Beispiel mittels der Darstellung eines einheitlichen Farbtons, insbesondere ein schwarzer Farbton, auf dem Display. Unter einer Fehlermeldung kann beispielsweise auch ein Fehler-Flag verstanden werden. Anstelle einer Fehlermeldung und/oder einem Interrupt kann auch ein Reset des Displays ausgelöst werden. Folglich kann das Display zum Beispiel abgeschaltet und/oder dann neu gestartet werden.

Ferner wird eine Steuerungseinheit eines Anzeigesystems vorgeschlagen, wobei die Steuerungseinheit ein Überwachungsmodul aufweist und wobei der Anzeigevorrichtung Bilddaten zugeordnet sind. Die Bilddaten sind abhängig von einem Farbwert der Bilddaten und/oder einem Helligkeitswert der Bilddaten in mindestens zwei Gruppen eingeteilt. Das Überwachungsmodul ist eingerichtet, aus den Bilddaten mindestens einer Gruppe ein Prüfwert für die jeweilige Gruppe zu ermitteln. Ferner ist das Überwachungsmodul eingerichtet, den ermittelten Prüfwert einer Gruppe mit einem vorgegebenen Prüfwert der jeweiligen Gruppe zu vergleichen, wobei das Überwachungsmodul eine Gültigkeit der Bilddaten feststellt, wenn der ermittelte Prüfwert der jeweiligen Gruppe und der vorgegebene Prüfwert der jeweiligen Gruppe übereinstimmen. Das Überwachungsmodul ist eingerichtet eine Ungültigkeit der Bilddaten dann festzustellen, wenn der ermittelte Prüfwert der jeweiligen Gruppe und der vorgegebene Prüfwert der jeweiligen Gruppe nicht übereinstimmen.

### Kurze Beschreibung der Zeichnungen

Ausführungsbeispiele der Erfindung sind in den Zeichnungen dargestellt und in den nachfolgenden Beschreibungen näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird. Es zeigen:
Fig. 1 eine schematische Darstellung einer Draufsicht eines Fahrzeugs mit einer Anzeigevorrichtung gemäß eines Ausführungsbeispiels der vorliegenden Erfindung;
Fig. 2 eine schematische Darstellung eines Anzeigesystems gemäß eines Ausführungsbeispiels der vorliegenden Erfindung;
Fig. 3 eine schematische Darstellung eines Symbols auf einem Teil einer Anzeigevorrichtung gemäß eines Ausführungsbeispiels der vorliegenden Erfindung;
Fig. 4 eine schematische Darstellung einer Einteilung der Bilddaten in Gruppen gemäß eines Ausführungsbeispiels der vorliegenden Erfindung;
Fig. 5 ein Ablaufdiagramm eines Verfahrens gemäß eines Ausführungsbeispiels der vorliegenden Erfindung;
Fig. 6 eine schematische Darstellung eines Symbols auf einem Teil einer Anzeigevorrichtung gemäß eines Ausführungsbeispiels der vorliegenden Erfindung;
Fig. 7 eine schematische Darstellung einer Ermittlung eines maximalen Farbwerts der Bilddaten gemäß eines Ausführungsbeispiels der vorliegenden Erfindung.

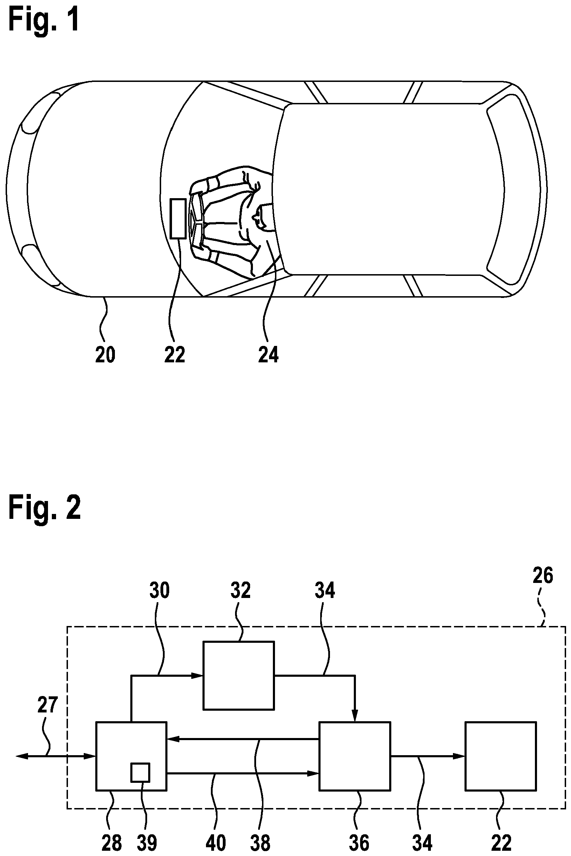

Fig. 1 zeigt eine Ausgestaltungsform einer schematischen Darstellung einer Draufsicht eines Fahrzeugs 20, beispielsweise eines Autos, mit einer Anzeigevorrichtung 22. Die Anzeigevorrichtung 22, beispielsweise ein LCD, ist derart in dem Fahrzeug 20 angeordnet, dass ein Betrachter 24 die Anzeigevorrichtung 22 betrachten kann, wobei die Anzeigevorrichtung 22 Informationen an den Betrachter 24 ausgeben kann. Diese ausgegebenen Informationen können beispielsweise Informationen über den Fahrzeugzustand, wie die Geschwindigkeit, die Drehzahlanzeige und/oder die Tankfüllung, und/oder Informationen zu Navigationshinweisen und /oder Informationen von Fahrsicherheitssystemen und/oder Informationen des Entertainment Systems sein. Alternativ kann die Anzeigevorrichtung 22 auch in der Mittelkonsole des Fahrzeugs 20 angebracht werden.

Fig. 2 zeigt eine schematische Darstellung eines Anzeigesystems 26. Das Anzeigesystem 26 ist dazu eingerichtet insbesondere das Verfahren zur Überprüfung einer Gültigkeit von Bilddaten auszuführen. Das Anzeigesystem 26 umfasst einen Controller 28, einen Grafikcontroller 32, ein Überwachungsmodul 36 und eine Anzeigeeinheit 22, beispielsweise ein Display, zum Beispiel ein LCD. Der Controller 28 kommuniziert mit einem Fahrzeugbus 27 und erhält so Informationen von dem Fahrzeugbus, beispielsweise Informationen, die auf einer Anzeigevorrichtung 22 gemäß Fig. 1 angezeigt werden sollen. Informationen können zum einen Informationen gemäß Fig. 1 sowie beispielsweise Symbole, zum Beispiel Warnsymbole, und/oder Schrift bzw. Buchstaben sein.

Der Controller 28 des Anzeigesystems 26 erzeugt mittels dieser Informationen 27 Steuerdaten 30, welche an den Grafikcontroller 32 gesendet werden. Der Grafikcontroller 32 erzeugt mittels der Steuerdaten 30 Bilddaten 34, welche an ein Überwachungsmodul 36 übermittelt werden. Das Überwachungsmodul 36 errechnet gewisse Charakteristiken, beispielsweise einen Prüfwert für die in mindestens zwei Gruppen eingeteilten Bilddaten 34. Hierfür werden die Bilddaten 34 abhängig von einem Farbwert der Bilddaten 34 und/oder einen Helligkeitswert der Bilddaten 34 in mindestens zwei Gruppen eingeteilt. Das Überwachungsmodul 36 sendet den ermittelten Prüfwert 38 mindestens einer Gruppe vorteilhafterweise an den Controller 28. Hierzu ist das Überwachungsmodul 36 vorzugsweise direkt mit dem Controller 28 verbunden. Der Controller 28 ist dazu eingerichtet, den ermittelten Prüfwert 38 einer Gruppe mit einem vorgegebenen Prüfwert der jeweiligen Gruppe zu vergleichen. Die vorgegebenen Prüfwerte 38 können beispielsweise in einem Speicher 39 in dem Controller 28 abgelegt sein und/oder über den Fahrzeugbus 27 übermittelt werden. Der Controller 28 stellt eine Gültigkeit der Bilddaten 34 nur dann fest, wenn der ermittelte Prüfwert 38 der jeweiligen Gruppe und der vorgegebene Prüfwert 38 der jeweiligen Gruppe übereinstimmen. Ferner stellt der Controller 28 eine Ungültigkeit der Bilddaten 34 dann fest, wenn der ermittelte Prüfwert 38 der jeweiligen Gruppe und der vorgegebene Prüfwert 38 der jeweiligen Gruppe nicht übereinstimmen. Die Konfiguration der Bilddaten-Prüfung 40 und/oder die Ergebnisse der Prüfung 40 können beispielsweise anschließend an das Überwachungsmodul 36 gesendet werden.

Alternativ kann ferner ebenfalls das Überwachungsmodul 36 dazu eingerichtet sein, den ermittelten Prüfwert 38 einer Gruppe mit einem vorgegebenen Prüfwert der jeweiligen Gruppe zu vergleichen sowie eine Gültigkeit und/oder eine Ungültigkeit der von dem Grafikcontroller 32 übermittelten Bilddaten 34 festzustellen.

Falls die Gültigkeit der Bilddaten in dem Controller 28 und/oder in dem Überwachungsmodul 36 festgestellt wird, dann ist das Überwachungsmodul 36 dazu eingerichtet, die Bilddaten für die Anzeige der Bilddaten an die Anzeigevorrichtung 22 weiterzuleiten. Wird eine Gültigkeit der Bilddaten in dem Controller 28 und/oder in dem Überwachungsmodul 36 nicht festgestellt, so ist das Überwachungsmodul 36 und/oder der Controller 28 eingerichtet, eine Fehlermeldung zu generieren und/oder die Anzeigevorrichtung 22 zumindest teilweise abzuschalten. Die Folge aus der Fehlermeldung wäre vorteilhafterweise, die Anzeigevorrichtung 22 zumindest teilweise abzuschalten. Alternativ kann anstelle einer Fehlermeldung auch ein Interrupt an einen zweiten Rechner ausgelöst werden, der dann einen Fehler abspeichert und das Anzeigesystem 26 und/oder Teile des Anzeigesystems 26, beispielsweise den Controller 28 und/oder den Grafikcontroller 32 neu startet und/oder einen Reset auslöst.

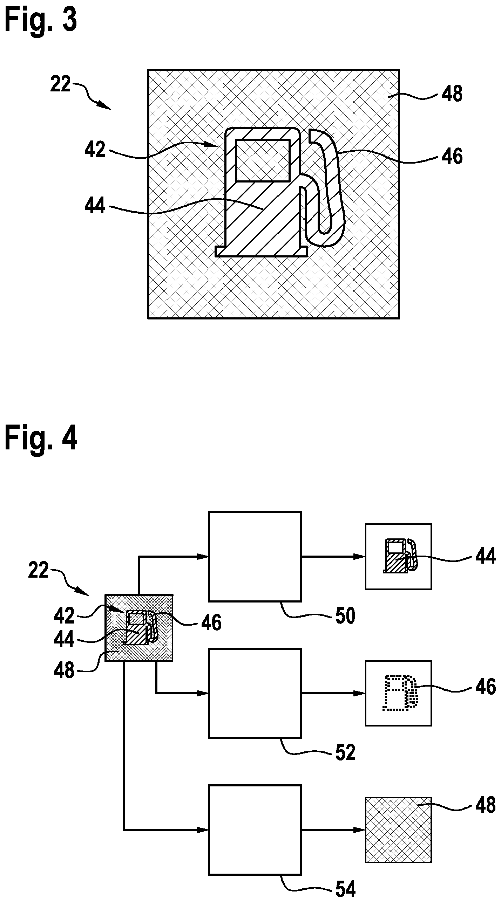

Fig. 3 zeigt eine schematische Darstellung eines Symbols 42 auf einem Teil einer Anzeigevorrichtung 22. In dieser beispielhaften Ausführungsform wird ein Symbol einer Zapfsäule einer Tankstelle dargestellt, welches einen Fahrer eines Fahrzeugs darüber informieren soll, dass die Tankfüllung beispielsweise einen Grenzwert erreicht hat und dass der Fahrer sein Fahrzeug betanken soll. Es können jedoch auch andere Warnsymbole und/oder Schrift bzw. Buchstaben dargestellt werden, beispielsweise Symbole und/oder Schrift bzw. Buchstaben eines Fahrsicherheitssystems, zum Beispiel des Abstandwarners, des ESPs, des ABSs, des Spurhalteassistenten oder der Beleuchtung des Fahrzeugs.

Das Symbol 42 wird in einer gesättigten Farbe, vorzugsweise einer Warnfarbe, hier gelb, dargestellt. Wird ein Symbol 42 in einer gesättigten Farbe dargestellt, weisen die Bilddaten 44 zur Darstellung des Symbols 42 einen maximalen Farbwert 44 auf. Mit anderen Worten werden die Bilddaten mit einem maximalen Farbwert 44 angezeigt, die zu einem Farbstempel 44 des Symbols gehören und/oder die Form des Symbols definieren bzw. für die Form des Symbols entscheidend sind. Ferner können die Bilddaten des Symbols 42 alternativ oder zusätzlich einen maximalen Helligkeitswert 44 aufweisen. Mit anderen Worten werden die Bilddaten mit einem maximalen Helligkeitswert 44 angezeigt, die Form des Symbols definieren bzw. für die Form des Symbols entscheidend sind. Diese Werte weisen insbesondere eine Transparenz von 0% auf. Der maximale Farbwert 44 ist gegeben durch eine verwendete Anzahl von Bits zur Datenübertragung. Beispielsweise kann bei der Verwendung von 5 Bits zur Datenübertragung der maximale Farbwert einen Wert von 31 annehmen oder bei der Verwendung von 8 Bits zur Datenübertragung einen maximalen Farbwert von 255.

Der Rand 46 des Symbols 42 wird durch Bilddaten definiert, die keinen maximalen Farbwert, jedoch einen größeren Farbwert gegenüber einem Hintergrund 48 des Symbols 42 aufweisen. Die Bilddaten am Rand 46 des Symbols 42 sollen vorzugsweise den Farbübergang zwischen dem Symbol und dem Hintergrund glätten.

Der Hintergrund 48 des Symbols 42 auf der Anzeigevorrichtung 22 ist vorzugsweise dunkler im Gegensatz zu der Darstellung des Symbols 42. Ferner kann der Hintergrund 48 des Symbols 42 eine dynamische Darstellung von Bilddaten aufweisen, wodurch der Hintergrund 48 sich gegenüber dem Symbol 42 bewegt.

Fig. 4 zeigt eine schematische Darstellung einer Einteilung der Bilddaten in Gruppen. In dieser Ausgestaltungsform werden die Bilddaten in drei Gruppen eingeteilt. Einer ersten Gruppe 50 der Bilddaten werden alle Bilddaten mit einem maximalen Farbwert 44 zugeteilt. Hierfür werden alle Bilddaten herausgefiltert, die einen maximalen Farbwert 44 aufweisen. Beispielsweise kann bei der Verwendung von 5 Bits zur Da tenübertragung der maximale Farbwert einen Wert von 31 annehmen oder bei der Verwendung von 8 Bits zur Datenübertragung einen maximalen Farbwert von 255. Der ersten Gruppe 50 der Bilddaten werden somit die Bilddaten zugeteilt, welche zu dem Teil 44 des Symbols 42 gehören, der mit einem maximalen Farbwert dargestellt wird. Mit anderen Worten werden der ersten Gruppe 50 die Bilddaten zugeteilt, mittels welcher das Symbol in einer gesättigten Farbe dargestellt wird und/oder es werden der ersten Gruppe 50 die Bilddaten zugeteilt welche zu einem Farbstempel des Symbols gehören. Mit anderen Worten werden die Bilddaten in die erste Gruppe 50 eingeteilt, die zu einem Farbstempel 44 des Symbols gehören und/oder die Form des Symbols definieren bzw. für die Form des Symbols entscheidend sind.

Einer zweiten Gruppe 52 der Bilddaten werden alle Bilddaten mit einem Farbwert zwischen einer ersten vorgegebenen Grenze eines maximalen Farbwerts und einer zweiten vorgegebenen Grenze einer Schwelle eines Farbwerts zugeteilt. Die erste Grenze ist vorzugsweise der maximale Farbwert, wobei die zweite Grenze ein vorgegebener Farbwert ist. Für die zweite Gruppe 52 werden folglich alle Bilddaten herausgefiltert, die kleiner als ein maximaler Farbwert u sind und größer als eine vorgegebene Schwelle eines Farbwerts. Bei der Verwendung von 8 Bits zur Datenübertragung weist der maximale Farbwert beispielsweise einen Wert von 255 auf. Folglich sind alle Bilddaten in der zweiten Gruppe 52 vorteilhafterweise kleiner als ein Wert, beispielsweise der Wert 255, und größer als eine vorgegebene, definierte Schwelle. Hierdurch werden der zweiten Gruppe 52 alle Bilddaten zugeteilt, welche zu dem Rand 46 des Symbols 42 gehört.

Die vorgegebene Schwelle kann vorzugsweise in Abhängigkeit des Helligkeitswerts definiert werden. Beispielsweise kann die Schwelle zwischen 25% und 50%, insbesondere 30 %, des maximalen Helligkeitswerts der Bilddaten betragen.

Einer dritten Gruppe 54 der Bilddaten werden alle Bilddaten mit einem Farbwert und/oder einem Helligkeitswert unterhalb und/oder gleich einer Schwelle eines Farbwerts und/oder eines Helligkeitswerts zugeteilt. Mit anderen Worten werden der dritten Gruppe 54 alle Bilddaten zugeteilt, deren Werte kleiner und vorzugsweise auch gleich einer vorgegebenen Schwelle sind. Die Schwelle wird vorteilhafterweise in Abhängig keit des Helligkeitswerts definiert, wobei die Schwelle zwischen 25% und 50%, insbesondere 30 %, des maximalen Helligkeitswerts der Bilddaten beträgt. Die Schwelle kann vorzugsweise denselben Wert aufweisen, wie die zweite Grenze und somit die Schwelle zur Einteilung der Bilddaten in die zweite Gruppe 52. Hierdurch werden für die dritte Gruppe 54 alle Werte herausgefiltert, welche dunkler gegenüber dem angezeigten Symbol sind und somit für die Darstellung des Hintergrunds 48 verwendet werden. Der dritten Gruppe 54 werden somit alle Bilddaten zugeteilt, welche für die Darstellung des Hintergrunds 48 des Symbols 42 verwendet werden.

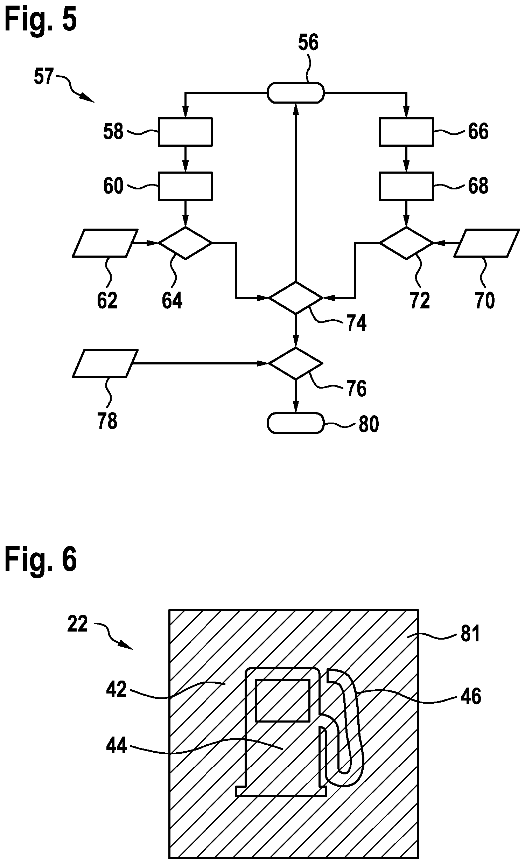

Fig. 5 zeigt ein Ablaufdiagramm eines Verfahrens 57 zum Überprüfen einer Gültigkeit von Bilddaten. Die Schritte des Verfahrens 57 können einerseits auf einer Einheit, beispielsweise einem Controller 28 oder einen Überwachungsmodul 36 durchgeführt werden oder andererseits können einzelne Schritte auf unterschiedlichen Einheiten durchgeführt werden, beispielsweise auf dem Controller 28 und dem Überwachungsmodul 36.

In dieser Ausgestaltungsform werden Schritte des Verfahrens 57 auf einem Controller 28 sowie weitere Schritte des Verfahrens 57 auf einem Überwachungsmodul 36 durchgeführt.

In einem ersten Schritt 56 wird durch den Controller 28 das Verfahren 57 gestartet. Mit anderen Worten wird ein Erkennen eines Symbols bzw. ein Überprüfen einer Gültigkeit von Bilddaten gestartet. Die Information bezüglich des Starts des Verfahrens 57 wird an das Überwachungsmodul 36 weitergeleitet. Die Bilddaten sind gemäß Fig. 4 abhängig von einem Farbwert der Bilddaten und/oder einem Helligkeitswert der Bilddaten von dem Überwachungsmodul 36 und/oder dem Controller 28 in mindestens zwei Gruppen eingeteilt. Die jeweiligen Schwellwerte bzw. Grenzen, beispielsweise der maximalen Farbwert und/oder der maximalen Helligkeitswert und/oder die Schwelle eines Farbwerts und/oder eines Helligkeitswerts werden vorzugsweise vom Controller 28 an das Überwachungsmodul 36 übertragen.

In dem Überwachungsmodul 36 wird anschließend für mindestens eine Gruppe ein Prüfwert für die jeweilige Gruppe ermittelt. In dieser Ausführungsform wird in einem zweiten Schritt 58 in dem Überwachungsmodul 36 ein Prüfwert für eine erste Gruppe 50 von Bilddaten errechnet. Vorzugsweise werden der ersten Gruppe 50 alle Bilddaten mit einem maximalen Farbwert zugeteilt.

Der Prüfwert der ersten Gruppe 50 kann beispielsweise errechnet werden, indem über die Bilddaten eine zyklischen Redundanzprüfung, auch CRC, durchgeführt und folglich eine CRC-Summe ermittelt wird. Hierdurch wird sichergestellt, dass bei abweichender Darstellung der Biddaten bzw. des Symbols auf einer Anzeigevorrichtung gegenüber einer zu erwartenden Darstellung der Biddaten bzw. des Symbols, zum Beispiel aufgrund von Farbfehlern, Transformation oder Nicht-Anzeige des Symbols, eine abweichende und/oder keine Darstellung der Bilddaten bzw. des Symbols sofort erkannt wird, weil die ermittelte CRC-Summe der Bilddaten sich von den entsprechende Bilddaten unterscheiden bzw. weil die ermittelte CRC-Summe der Bilddaten sich von den entsprechenden Bilddaten, über welche die CRC-Summe ermittelt wurde, unterscheiden.

In einem dritten Schritt 60 wird der in dem Überwachungsmodul 36 ermittelte Prüfwert der ersten Gruppe 50 an den Controller 28 gesendet. Der Controller 28 erhält in einem vierten Schritt 62 zusätzlich einen vorgegebenen Prüfwert als Referenz für die erste Gruppe50, welcher vorzugsweise ursprünglich entsprechend mit derselben Methode berechnet wurde wie der ermittelte Prüfwert der jeweiligen Gruppe. Der vorgegebene Prüfwert wurde für die jeweilige Gruppe bereits ermittelt und kann beispielsweise in einen internen Speicher 39 im Controller 28 gespeichert werden und/oder dem Controller 28 von extern übermittelt werden. Der Controller 28 überprüft in einen fünften Schritt 64 den in dem Überwachungsmodul 36 ermittelte Prüfwert der ersten Gruppe 50, indem der ermittelte Prüfwert einer, beispielsweise der ersten Gruppe 50 mit einem vorgegebenen Prüfwert der jeweiligen, beispielsweise der ersten Gruppe 50 verglichen wird. Eine Gültigkeit der Bilddaten der ersten Gruppe 50 wird nur dann festgestellt, wenn der ermittelte Prüfwert der ersten Gruppe 50 und der vorgegebene Prüfwert der ersten Gruppe 50 übereinstimmen. Eine Ungültigkeit der Bilddaten wird dann festgestellt, wenn der ermittelte Prüfwert der ersten Gruppe 50 und der vorgegebene Prüfwert der ersten Gruppe 50 nicht übereinstimmen.

In einem sechsten Schritt 66, wird in dem Überwachungsmodul 36 ein Prüfwert für eine zweite Gruppe von Bilddaten errechnet. Vorzugsweise werden einer zweiten Gruppe 52 alle Bilddaten mit einem Farbwert zwischen einer ersten vorgegebenen Grenze eines maximalen Farbwerts und einer zweiten vorgegebenen Grenze einer Schwelle eines Farbwerts zugeteilt. In der zweiten Gruppe 52 befinden sich vorzugsweise die Bilddaten, welche den Rand des Symbols darstellen.

Der Prüfwert der zweiten Gruppe 52 von Bilddaten kann beispielsweise errechnet werden in dem alle Bilddaten innerhalb der zweiten Gruppe 52 zusammengezählt bzw. aufsummiert werden. Mit anderen Worten kann die Anzahl aller Bilddaten der zweiten Gruppe 52 ermittelt werden. In dem sechsten Schritt 66 werden folglich alle Bilddaten zusammengezählt, die zwischen einer ersten vorgegebenen Grenze eines maximalen Farbwerts und einer zweiten vorgegebenen Grenze einer Schwelle eines Farbwerts liegen und somit zum Rand des Symbols gehören.

Alternativ kann der Prüfwert einer oder mehrerer Gruppen, hier der zweiten Gruppe 52, ermittelt werden, indem ein Mittelwert eines Farbwerts der Bilddaten einer Gruppe und/oder eines Helligkeitswerts der Bilddaten einer Gruppe und/oder eine Standardabweichung aus den Positionen der Bilddaten einer Gruppe ermittelt wird. Hierdurch kann ein statistisches Maß für die Streuung der Bilddaten und/oder der Schwerpunkt der Bilddaten innerhalb einer Gruppe berechnet werden.

In einem siebten Schritt 68 wird der in dem Überwachungsmodul 36 ermittelte Prüfwert an den Controller 28 gesendet. Der Controller 28 erhält in einem achten Schritt 70 zusätzlich einen vorgegebenen Prüfwert für die zweite Gruppe, welcher vorzugsweise ursprünglich entsprechend mit derselben Methode berechnet wurde wie der ermittelte Prüfwert der jeweiligen Gruppe. Der vorgegebene Prüfwert wurde für die jeweilige Gruppe bereits ermittelt und kann beispielsweise in einen internen Speicher 39 im Controller 28 gespeichert werden und/oder von extern an den Controller 28 übermittelt werden. Der Controller 28 überprüft in einem neunten Schritt 72 den in dem Überwachungsmodul 36 ermittelten Prüfwert, indem der ermittelte Prüfwert einer Gruppe mit einem vorgegebenen Prüfwert der jeweiligen Gruppe vergleichen wird. Eine Gültigkeit der Bilddaten der zweiten Gruppe 52 wird nur dann festgestellt, wenn der ermittelte Prüfwert der zweiten Gruppe 52 und der vorgegebene Prüfwert der zweiten Gruppe 52 übereinstimmen. Eine Ungültigkeit der Bilddaten wird dann festgestellt, wenn der ermittelte Prüfwert der zweiten Gruppe 52 und der vorgegebene Prüfwert der zweiten Gruppe nicht übereinstimmen.

In einer Weiterentwicklung kann zum Abfangen von Toleranzen eine Gültigkeit und/oder eine Ungültigkeit der Bilddaten dann festgestellt werden, wenn der ermittelte Prüfwert einer Gruppe einen bestimmten Prozentsatz von dem vorgegebenen Prüfwerte der jeweiligen Gruppe abweicht. Beispielsweise kann eine Gültigkeit der Bilddaten dann festgestellt werden, wenn der ermittelte Prüfwert der zweiten Gruppe weniger als 5 % bis 30 %, insbesondere 10 %, von dem vorgegebenen Prüfwert der zweiten Gruppe abweicht und/oder eine Ungültigkeit der Bilddaten dann festgestellt werden wenn der ermittelte Prüfwert der zweiten Gruppe mehr als 5 % bis 30 %, insbesondere 10 %, von dem vorgegebenen Prüfwert der zweiten Gruppe abweicht.

In einem zehnten Schritt 74 werden die Ergebnisse der Überprüfungen des fünften Schritts 64 sowie das neunten Schritts 72 in dem Controller 28 zusammengeführt. Nun wird überprüft, ob alle Bedingungen erfüllt sind bzw. ob eine Gültigkeit der überprüften Bilddaten der jeweiligen Gruppen der Bilddaten festgestellt wurde. Wurde für die Bilddaten aller geprüfter Gruppen eine Gültigkeit der Bilddaten festgestellt, in diesem Beispiel eine Gültigkeit für die Bilddaten der ersten Gruppe 50 sowie eine Gültigkeit für die Bilddaten der zweiten Gruppe 52, beginnt das Verfahren 57 erneut mit dem ersten Schritt 56, folglich mit dem Beginn der Erkennung des Symbols und/oder mit dem Überprüfen einer Gültigkeit der Bilddaten.

Wurde für die Bilddaten einer oder mehrerer Gruppen eine Ungültigkeit festgestellt, so wird in einem elften Schritt 76 überprüft, ob das Symbol auf der Anzeigevorrichtung 22 angezeigt werden soll. Die Information, ob das Symbol dargestellt werden soll, wird der Einheit in einem zwölften Schritt 78 übermittelt. Diese Information wird vorteilhafterweise von dem Fahrzeugbus zur Verfügung gestellt. Erhält der Controller 28 in dem elften Schritt 76 die Information, dass das Symbol nicht dargestellt werden soll, wird das Verfahren 57 erneut mit dem ersten Schritt 56 gestartet. Falls das Symbol auf einer Anzeigevorrichtung 22 nicht dargestellt werden soll, ist eine Ungültigkeit der Bilddaten für die jeweilige Gruppen vorteilhafterweise nicht relevant.

Soll das Warnsymbol jedoch auf der Anzeigevorrichtung 22 angezeigt werden und wurde eine Ungültigkeit der Bilddaten einer oder mehrerer Gruppen festgestellt, so wird in einem dreizehnten Schritt 80 die Anzeigevorrichtung in einen sicheren Zustand versetzt. Hierzu kann die Anzeigevorrichtung 22 zur Anzeige der Bilddaten beispielsweise zumindest teilweise oder ganz abgeschaltet werden. Alternativ kann eine Fehlermeldung generiert werden. In einer Weiterentwicklung kann das Display und/oder die Anzeigevorrichtung 22 und/oder das Anzeigesystem 26 und/oder Teile bzw. Einheiten des Anzeigesystems 26 heruntergefahren und/oder neu gestartet werden. Ferner kann ein Interrupt generiert werden.

Der zweite Schritt 58, der dritte Schritt 60, der vierte Schritt 62 und der fünfte Schritt 64, welche die Generierung eines Prüfwerts der ersten Gruppe 50 der Bilddaten, den Vergleich des ermittelten Prüfwerts der ersten Gruppe 50 mit dem vorgegebenen Prüfwert der ersten Gruppe 50 sowie die Feststellung einer Gültigkeit bzw. einer Ungültigkeit der Bilddaten der ersten Gruppe 50 beschreiben, werden nacheinander ausgeführt. Ebenfalls werden der sechste Schritt 66, siebten Schritt 68, der achten Schritt 70 sowie der neunten Schritt 72, welche die Generierung eines Prüfwerts der zweiten Gruppe 52 der Bilddaten, den Vergleich des ermittelten Prüfwerts der zweiten Gruppe 52 mit dem vorgegebenen Prüfwert der zweiten Gruppe 52 sowie die Feststellung einer Gültigkeit bzw. einer Ungültigkeit der Bilddaten der zweiten Gruppe 52 beschreiben, nacheinander ausgeführt. In einer weiteren Ausführungsform kann vorzugsweise parallel einer weiterer Prüfwert einer dritten Gruppe von Bilddaten ermittelt werden, der ermittelte Prüfwert der dritten Gruppe mit einem vorgegebenen Prüfwert einer dritten Gruppe verglichen werden sowie eine Gültigkeit bzw. eine Ungültigkeit der Bilddaten einer dritten Gruppe festgestellt werden.

Die Schritte in dem Verfahren 57 zu der Generierung eines Prüfwerts einer Gruppe der Bilddaten, dem Vergleich des ermittelten Prüfwerts der jeweiligen Gruppe mit dem vorgegebenen Prüfwert der jeweiligen Gruppe sowie die Feststellung einer Gültigkeit bzw. eine Ungültigkeit der Bilddaten der jeweiligen Gruppe können parallel oder hintereinander zu der Generierung eines Prüfwerts einer anderen Gruppe der Bilddaten, den Vergleich des ermittelten Prüfwerts der jeweiligen anderen Gruppe mit dem vorgegebenen Prüfwert der jeweiligen anderen Gruppe sowie die Feststellung einer Gültigkeit bzw. eine Ungültigkeit der Bilddaten der jeweiligen anderen Gruppe ausgeführt werden. Folglich können in diesem Ausführungsbeispiel die Schritte in dem Verfahren 57 der Feststellung einer Gültigkeit bzw. einer Ungültigkeit der Bilddaten der ersten Gruppe 50 parallel oder hintereinander zu den Schritten der Feststellung einer Gültigkeit bzw. einer Ungültigkeit der Bilddaten der zweiten Gruppe 52 ausgeführt werden.

In einer Weiterentwicklung können alle Schritte des Verfahrens 57 auf einer Einheit ausgeführt werden, beispielsweise auf einem Controller 28 oder auf einem Überwachungsmodul 36.

In einer weiteren Ausführungsform des Verfahrens 57 ist es möglich lediglich die Bilddaten eines definierten Bereichs auf einer Anzeigevorrichtung 22 zum Überprüfen der Gültigkeit der Bilddaten des definierten Bereichs auf der Anzeigevorrichtung 22 heranzuziehen. Dies ist möglich, da vorteilhafterweise bereits im vorherein bekannt sein kann, wo sich ein Symbol auf einer Anzeigevorrichtung 22 befindet bzw. wo das Symbol auf der Anzeigevorrichtung 22 angezeigt wird.

Fig. 6 zeigt eine Darstellung eines Symbols auf einem Teil einer Anzeigevorrichtung 22 gemäß Fig. 3. Der Unterschied zur Fig. 3 liegt darin, dass der Hintergrund 81 des Symbols 42 im Gegensatz zu der Darstellung des Symbols 42 zu hell, bzw. mit einem zu hohen Helligkeitswert und/oder einem zu hohen Farbwert dargestellt wird. Mit anderen Worten weisen die Bilddaten des Hintergrunds 81 zu hohe Helligkeitswerte und/oder zu hohe Farbwerte im Gegensatz zu den Bilddaten des Farbstempels 44 des Symbols auf, wodurch das Symbol 42 durch einen Betrachter kaum von dem Hintergrund 81 unterschieden werden kann. Eine Ungültigkeit der Bilddaten wird in diesem Beispiel in Fig. 6 mittels des Verfahrens gemäß Fig. 5 festgestellt.

Einer zweiten Gruppe 52 der Bilddaten werden gemäß Fig. 4 alle Bilddaten mit einem Farbwert zwischen einer ersten vorgegebenen Grenze eines maximalen Farbwerts und einer zweiten vorgegebenen Grenze einer Schwelle eines Farbwerts zugeteilt. Ferner wird aus den Bilddaten der zweiten Gruppe 52 ein Prüfwert für die zweite Gruppe ermittelt, wobei der ermittelte Prüfwert der zweiten Gruppe mit einem vorgegebenen Prüfwert der zweiten Gruppe verglichen wird. In diesem Ausführungsbeispiel stimmt der ermittelte Prüfwert der zweiten Gruppe und der vorgegebene Prüfwert der zweiten Gruppe nicht überein, weshalb eine Ungültigkeit der Bilddaten festgestellt wird. Beispielsweise wird zum Ermitteln des Prüfwerts die Anzahl der Bilddaten in der zweiten Gruppe ein Prüfwert ermittelt, wobei in dieser Ausführungsform ein Prüfwert ermittelt wird, der nicht mit dem vorgegebenen Prüfwert der zweiten Gruppe übereinstimmt und hier beispielsweise größer ist als der vorgegebene Prüfwert der zweiten Gruppe. Es befinden sich also folglich mehr Bilddaten in der zweiten Gruppe wie eigentlich korrekt bzw. vorgesehen wäre. Folglich wird eine Ungültigkeit der Bilddaten der zweiten Gruppe festgestellt.

Die Überprüfung der Gültigkeit bzw. der Ungültigkeit der Bilddaten kann ebenfalls mit den Bilddaten einer dritten Gruppe der Bilddaten gemäß Fig. 4 durchgeführt werden. Hierbei werden einer dritten Gruppe der Bilddaten alle Bilddaten mit einem Farbwert und/oder einem Helligkeitswert unterhalb und/oder gleich einer Schwelle eines Farbwerts und/oder eines Helligkeitswerts zugeteilt. Ferner wird aus den Bilddaten der dritten Gruppe ein Prüfwert für die dritte Gruppe ermittelt, wobei der ermittelte Prüfwert der dritten Gruppe mit einem vorgegebenen Prüfwert der dritten Gruppe verglichen wird. In diesem Ausführungsbeispiel stimmt der ermittelte Prüfwert der dritten Gruppe und der vorgegebene Prüfwert der dritten Gruppe nicht überein, weshalb eine Ungültigkeit der Bilddaten festgestellt wird. Beispielsweise wird zum Ermitteln des Prüfwerts die Anzahl der Bilddaten in der dritten Gruppe ermittelt, wobei in dieser Ausführungsform ein Prüfwert ermittelt wird, der nicht mit dem vorgegebenen Prüfwert der dritten Gruppe übereinstimmt und hier beispielsweise kleiner ist als der vorgegebene Prüfwert der dritten Gruppe. Es befinden sich also folglich weniger Bilddaten in der dritten Gruppe wie eigentlich korrekt bzw. vorgesehen wäre. Folglich wird eine Ungültigkeit der Bilddaten der dritten Gruppe festgestellt.

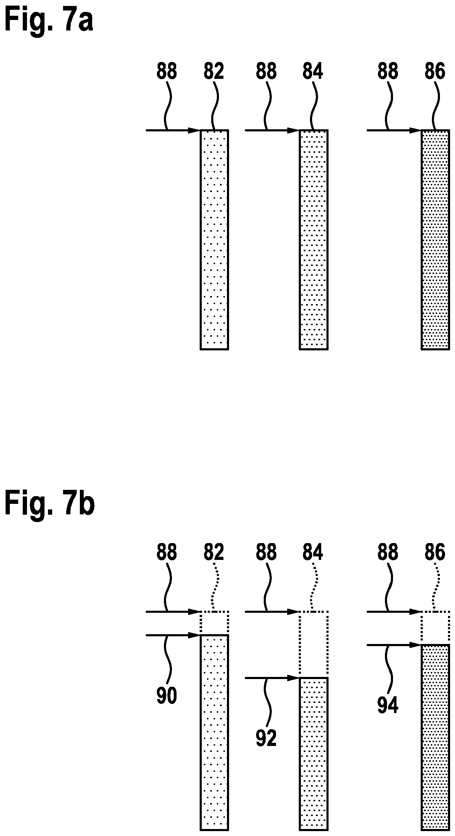

Fig. 7 zeigt eine schematische Darstellung einer Ermittlung eines maximalen Farbwerts der Bilddaten. In dieser beispielhaften Ausführungsform werden die Bilddaten zum Ausgleich von Fertigungstoleranzen der Anzeigevorrichtung 22 bzw. des Displays bei der Farbdarstellung bearbeitet. Hierfür wird ein Weißabgleich angewendet. Das Ergebnis des Weißabgleich ist der, dass sich der maximale Farbwert der Bilddaten für die Anzeigevorrichtung 22 in dem Anzeigesystem 26 verändert. Bei der Verwendung von 8 Bits zur Datenübertragung würde der maximale Farbwert einen Wert von 255 aufweisen, jedoch kann dieser bei der Anwendung eines Weißabgleich herabgesetzt werden. Bei der Verwendung von drei Grundfarben Rot, Grün und Blau kann der maximale Farbwert für jede der drei Grundfarben unterschiedlich eingestellt werden. Folglich werden die Bilddaten auch für jede der Grundfarben Rot, Grün und Blau jeweils in mindestens zwei Gruppen eingeteilt.

In Fig. 7a wird der maximale Farbwert 88 und/oder Helligkeitswert, hier 255, jeweils für die drei Grundfarben Rot 82, Grün 84 und Blau 86 vor einem Weißabgleich dargestellt. In Fig. 7b wird der maximale mögliche, neu kalibrierte Farbwert und/oder Helligkeitswert jeweils für die drei Grundfarben Rot 82, Grün 84 und Blau 86 dargestellt, welcher mittels eines Weißabgleich bearbeitet wurde und somit auf niedrigere Werte im Gegensatz zu den vorherigen maximalen Farbwerten und/oder Helligkeitswerten, hier 255, herabgesetzt wurde. Für die Grundfarbe Rot 82 wird der maximal mögliche Farbwert 88 mit dem Wert 255 auf einen zweiten, kalibrierten maximalen Farbwert 90 beispielsweise mit dem Wert 250 herabgesetzt. Für die Grundfarbe Grün 84 wird der maximal mögliche Farbwert 88 mit dem Wert 255 auf einen dritten, kalibrierten maximalen Farbwert 92 beispielsweise mit dem Wert 245 herabgesetzt. Für die Grundfarbe Blau 86 wird der maximal mögliche Farbwert 88 mit dem Wert 255 auf einen vierten, kalibrierten maximalen Farbwert 94 beispielsweise mit dem Wert 249 herabgesetzt. Die Differenz zu dem maximal möglichen Farbwert 88 mit dem Wert 255 wird für die drei Grundfarben Rot 82, Grün 84 und Blau 86 mittels einer gepunkteten Linie dargestellt.

Die neuen, kalibrierten maximalen Farbwert der drei Grundfarben Rot 82, Grün 84 und Blau 86 sind bei dem Weißabgleich der Anzeigevorrichtung 22 bekannt und werden an eine Einheit des Anzeigesystems26 übermittelt. Somit können bei der Einteilung der Bilddaten in die unterschiedlichen Gruppen, beispielsweise in die erste Gruppe 50, in die alle Bilddaten gemäß Fig. 4 eingeteilt werden, die einen maximalen Farbwert aufweisen, diese neuen, kalibrierten maximalen Farbwerte jeweils für die drei Grundfarben Rot 82, Grün 84 und Blau 86 verwendet werden. Dies kann ebenfalls für die Einteilung der Bilddaten in die zweite Gruppe 52 gemäß Fig. 4 verwendet werden. Alternativ kann für die Einteilung der Bilddaten in die zweite Gruppe jeweils für die Grundfarbe Rot, Grün und Blau der erste maximale Farbwert verwendet werden, wobei die veränderten Werte durch den Weißabgleich mittels einer Toleranzschwelle für die Feststellung einer Gültigkeit bzw. eine Ungültigkeit gemäß Fig. 5 kompensiert werden.

## Patentansprüche

1. Verfahren zum Überprüfen einer Gültigkeit von Bilddaten, wobei die Bilddaten einer Anzeigevorrichtung (22) zugeordnet sind, **dadurch gekennzeichnet,**
**dass** die Bilddaten abhängig von einem Farbwert der Bilddaten in mindestens zwei Gruppen eingeteilt werden, wobei einer ersten Gruppe (50) der Bilddaten alle Bilddaten mit einem maximalen Farbwert zugeteilt werden und wobei einer zweiten Gruppe (52) der Bilddaten alle Bilddaten mit einem Farbwert zwischen einer ersten vorgegebenen Grenze eines maximalen Farbwerts und einer zweiten vorgegebenen Grenze einer Schwelle eines Farbwerts zugeteilt werden,
**dass** aus den Bilddaten mindestens einer Gruppe ein Prüfwert für die jeweilige Gruppe ermittelt wird,
**dass** der ermittelte Prüfwert einer Gruppe mit einem vorgegebenen Prüfwert der jeweiligen Gruppe verglichen wird,
**dass** eine Gültigkeit der Bilddaten nur dann festgestellt wird, wenn der ermittelte Prüfwert der jeweiligen Gruppe und der vorgegebene Prüfwert der jeweiligen Gruppe übereinstimmen
und **dass** eine Ungültigkeit der Bilddaten dann festgestellt wird, wenn der ermittelte Prüfwert der jeweiligen Gruppe und der vorgegebene Prüfwert der jeweiligen Gruppe nicht übereinstimmen.

2. Verfahren nach einem der vorherigen Ansprüche, **dadurch gekennzeichnet, dass** einer dritten Gruppe der Bilddaten alle Bilddaten mit einem Farbwert und/oder einem Helligkeitswert unterhalb und/oder gleich einer Schwelle eines Farbwerts und/oder eines Helligkeitswerts zugeteilt werden.

3. Verfahren nach einem der vorherigen Ansprüche 2 - 3, **dadurch gekennzeichnet, dass** die Schwelle in Abhängigkeit des Helligkeitswerts definiert wird und dass die Schwelle zwischen 25% und 50% des maximalen Helligkeitswerts der Bilddaten beträgt.

4. Verfahren nach einem der vorherigen Ansprüche, **dadurch gekennzeichnet, dass** der Prüfwert einer Gruppe ermittelt wird, indem die Anzahl aller Bilddaten einer Gruppe ermittelt wird.

5. Verfahren nach einem der vorherigen Ansprüche, **dadurch gekennzeichnet, dass** der Prüfwert einer Gruppe ermittelt wird, indem ein Mittelwert eines Farbwerts der Bilddaten und/oder eines Helligkeitswerts der Bilddaten und/oder eine Standardabweichung aus den Positionen der Bilddaten einer Gruppe ermittelt wird.

6. Verfahren nach einem der vorherigen Ansprüche, **dadurch gekennzeichnet, dass** der Prüfwert für eine erste Gruppe (50) und eine zweite Gruppe (52) ermittelt wird und dass eine Gültigkeit der Bilddaten nur dann festgestellt wird, wenn der ermittelte Prüfwert der ersten Gruppe (50) und ein vorgegebener Prüfwert der ersten Gruppe (50) sowie der ermittelte Prüfwert der zweiten Gruppe (52) und ein vorgegebener Prüfwert der zweiten Gruppe (52) übereinstimmen.

7. Verfahren nach einem der vorherigen Ansprüche, **dadurch gekennzeichnet, dass** Bilddaten eines definierten Bereichs auf einer Anzeigevorrichtung (22) zum Überprüfen der Gültigkeit der Bilddaten des definierten Bereichs auf der Anzeigevorrichtung (22) herangezogen werden.

8. Verfahren nach einem der vorherigen Ansprüche, **dadurch gekennzeichnet, dass** eine Gültigkeit der Bilddaten dann festgestellt wird, wenn der ermittelte Prüfwert einer Gruppe weniger als 5 % bis 30 %, insbesondere 10 %, von dem vorgegebenen Prüfwert der jeweiligen Gruppe abweicht und/oder eine Ungültigkeit der Bilddaten dann festgestellt wird, wenn der ermittelte Prüfwert einer Gruppe mehr als 5 % bis 30 %, insbesondere 10 %, von dem vorgegebenen Prüfwert der jeweiligen Gruppe abweicht.

9. Verfahren nach einem der vorherigen Ansprüche, **dadurch gekennzeichnet, dass** eine Fehlermeldung und/oder ein Interrupt generiert wird, wenn die Gültigkeit der Bilddaten nicht festgestellt wird.

10. Verfahren nach einem der vorherigen Ansprüche, **dadurch gekennzeichnet, dass** eine Anzeigevorrichtung (22) zur Anzeige der Bilddaten zumindest teilweise oder ganz abgeschaltet wird, wenn die Gültigkeit der Bilddaten nicht festgestellt wird.

11. Steuerungseinheit eines Anzeigesystems (26), wobei die Steuerungseinheit ein Überwachungsmodul (36) und/oder einen Controller (28) aufweist und wobei der Anzeigevorrichtung (22) Bilddaten zugeordnet sind, **dadurch gekennzeichnet,**
**dass** die Bilddaten abhängig von einem Farbwert der Bilddaten in mindestens zwei Gruppen eingeteilt sind, wobei einer ersten Gruppe (50) der Bilddaten alle Bilddaten mit einem maximalen Farbwert zugeteilt werden und wobei einer zweiten Gruppe (52) der Bilddaten alle Bilddaten mit einem Farbwert zwischen einer ersten vorgegebenen Grenze eines maximalen Farbwerts und einer zweiten vorgegebenen Grenze einer Schwelle eines Farbwerts zugeteilt werden,
**dass** das Überwachungsmodul (36) und/oder der Controller (28) eingerichtet ist, aus den Bilddaten mindestens einer Gruppe ein Prüfwert für die jeweilige Gruppe zu ermitteln,
**dass** das Überwachungsmodul (36) und/oder der Controller (28) eingerichtet ist, den ermittelten Prüfwert einer Gruppe mit einem vorgegebenen Prüfwert der jeweiligen Gruppe zu vergleichen,
**dass** das Überwachungsmodul (36) und/oder der Controller (28) eine Gültigkeit der Bilddaten feststellt, wenn der ermittelte Prüfwert der jeweiligen Gruppe und der vorgegebene Prüfwert der jeweiligen Gruppe übereinstimmen
und **dass** das Überwachungsmodul (36) und/oder der Controller (28) eine Ungültigkeit der Bilddaten dann festgestellt, wenn der ermittelte Prüfwert der jeweiligen Gruppe und der vorgegebene Prüfwert der jeweiligen Gruppe nicht übereinstimmen.

12. Anzeigesystem (26) mit einer Steuerungseinheit nach Anspruch 11.

## Claims

1. Method for verifying a validity of image data, the image data being assigned to a display device (22), **characterized**
**in that** the image data are divided into at least two groups on the basis of a colour value of the image data, a first group (50) of the image data being assigned all image data with a maximum colour value and a second group (52) of the image data being assigned all image data with a colour value between a first specified limit of a maximum colour value and a second specified limit of a threshold for a colour value,
**in that**, from the image data of at least one group, a test value is determined for the respective group,
**in that** the determined test value for a group is compared with a specified test value for the respective group,
**in that** a validity of the image data is only determined if the determined test value for the respective group and the specified test value for the respective group correspond
and **in that** a non-validity of the image data is determined if the determined test value for the respective group and the specified test value for the respective group do not correspond.

2. Method according to any of the preceding claims, **characterized in that** a third group of the image data are assigned all image data with a colour value and/or a brightness value less than or equal to a threshold for a colour value and/or brightness value.

3. Method according to any of preceding Claims 2-3, **characterized in that** the threshold is defined on the basis of the brightness value and **in that** the threshold is between 25% and 50% of the maximum brightness value for the image data.

4. Method according to any of the preceding claims, **characterized in that** the test value for a group is determined by virtue of the quantity of all image data in a group being determined.

5. Method according to any of the preceding claims, **characterized in that** the test value for a group is determined by virtue of a mean value of a colour value of the image data and/or of a brightness value of the image data and/or a standard deviation from the positions of the image data of a group being determined.

6. Method according to any of the preceding claims, **characterized in that** the test value is determined for a first group (50) and for a second group (52) and **in that** a validity of the image data is only determined if the determined test value for the first group (50) and a specified first value for the first group (50) correspond and also the determined test value for the second group (52) and a specified test value for the second group (52) correspond.

7. Method according to any of the preceding claims, **characterized in that** image data from a defined region on a display device (22) are used to verify the validity of the image data of the defined region on the display device (22).

8. Method according to any of the preceding claims, **characterized in that** a validity of the image data is determined if the determined test value for a group deviates by less than 5% to 30%, in particular 10%, from the specified test value for the respective group and/or a non-validity of the image data is determined if the determined test value for a group deviates by more than 5% to 30%, in particular 10%, from the specified test value for the respective group.

9. Method according to any of the preceding claims, **characterized in that** an error message and/or an interrupt is generated if the validity of the image data is not determined.

10. Method according to any of the preceding claims, **characterized in that** a display device (22) for displaying the image data is switched off at least in part or else in full if the validity of the image data is not determined.

11. Control unit of a display system (26), the control unit having a monitoring module (36) and/or controller (28) and image data being assigned to the display device (22), **characterized**
**in that** the image data are divided into at least two groups on the basis of a colour value of the image data, a first group (50) of the image data being assigned all image data with a maximum colour value and a second group (52) of the image data being assigned all image data with a colour value between a first specified limit of a maximum colour value and a second specified limit of a threshold for a colour value,
**in that** the monitoring module (36) and/or the controller (28) is configured to determine, from the image data of at least one group, a test value for the respective group,
**in that** the monitoring module (36) and/or the controller (28) is configured to compare the determined test value for a group with a specified test value for the respective group,
**in that** the monitoring module (36) and/or the controller (28) determines a validity of the image data if the determined test value for the respective group and the specified test value for the respective group correspond and in that the monitoring module (36) and/or the controller (28) determines a non-validity of the image data if the determined test value for the respective group and the specified test value for the respective group do not correspond.

12. Display system (26) having a control unit according to Claim 11.

## Revendications

1. Procédé de contrôle de la validité de données d'image, les données d'image étant associées à un dispositif d'affichage (22), **caractérisé**
**en ce que** les données d'image sont réparties en deux groupes en fonction d'une valeur de couleur des données d'image, toutes les données d'image ayant une valeur de couleur maximale étant attribuées à un premier groupe (50) de données d'image et toutes les données d'image ayant une valeur de couleur comprise entre une première limite prédéfinie d'une valeur de couleur maximale et une deuxième limite prédéfinie d'un seuil d'une valeur de couleur étant attribuées à un deuxième groupe (52) de données d'image,
**en ce que**, à partir des données d'image d'au moins un groupe, il est déterminé une valeur de contrôle pour le groupe respectif,
**en ce que** la valeur de contrôle déterminée d'un groupe est comparée à une valeur de contrôle prédéfinie du groupe respectif,
**en ce qu'**une validité des données d'image n'est constatée que si la valeur de contrôle déterminée du groupe respectif et la valeur de contrôle prédéfinie du groupe respectif concordent,
et **en ce qu'**une invalidité des données d'image est constatée lorsque la valeur de contrôle déterminée du groupe respectif et la valeur de contrôle prédéfinie du groupe respectif ne concordent pas.

2. Procédé selon l'une des revendications précédentes, **caractérisé en ce que** toutes les données d'image ayant une valeur de couleur et/ou une valeur de luminosité inférieure et/ou égale à un seuil d'une valeur de couleur et/ou d'une valeur de luminosité sont attribuées à un troisième groupe de données d'image.

3. Procédé selon l'une quelconque des revendications 2 à 3 précédentes, **caractérisé en ce que** le seuil est défini en fonction de la valeur de luminosité et **en ce que** le seuil est compris entre 25% et 50% de la valeur de luminosité maximale des données d'image.

4. Procédé selon l'une des revendications précédentes, **caractérisé en ce que** la valeur de contrôle d'un groupe est déterminée en déterminant le nombre de toutes les données d'image d'un groupe.

5. Procédé selon l'une des revendications précédentes, **caractérisé en ce que** la valeur de contrôle d'un groupe est déterminée en déterminant une valeur moyenne d'une valeur de couleur des données d'image et/ou d'une valeur de luminosité des données d'image et/ou un écart type par rapport aux positions des données d'image d'un groupe.

6. Procédé selon l'une des revendications précédentes, **caractérisé en ce que** la valeur de contrôle est déterminée pour un premier groupe (50) et un deuxième groupe (52) et **en ce qu'**une validité des données d'image n'est constatée que si la valeur de contrôle déterminée du premier groupe (50) et une valeur de contrôle prédéfinie du premier groupe (50) ainsi que la valeur de contrôle déterminée du deuxième groupe (52) et une valeur de contrôle prédéfinie du deuxième groupe (52) concordent.

7. Procédé selon l'une des revendications précédentes, **caractérisé en ce que** des données d'image d'une zone définie sur un dispositif d'affichage (22) sont utilisées pour vérifier la validité des données d'image de la zone définie sur le dispositif d'affichage (22).

8. Procédé selon l'une des revendications précédentes, **caractérisé en ce que** la validité des données d'image est constatée lorsque la valeur de contrôle déterminée d'un groupe s'écarte de moins de 5 % à 30 %, en particulier de 10 %, de la valeur de contrôle prédéfinie du groupe respectif et/ou une invalidité des données d'image est constatée lorsque la valeur de contrôle déterminée d'un groupe s'écarte de plus de 5 % à 30 %, en particulier de 10 %, de la valeur de contrôle prédéfinie du groupe respectif.

9. Procédé selon l'une des revendications précédentes, **caractérisé en ce qu'**un message d'erreur et/ou une interruption sont générés lorsque la validité des données d'image n'est pas constatée.

10. Procédé selon l'une des revendications précédentes, **caractérisé en ce qu'**un dispositif d'affichage (22) destiné à afficher les données d'image est au moins partiellement ou totalement désactivé lorsque la validité des données d'image n'est pas constatée.

11. Unité de commande d'un système d'affichage (26), l'unité de commande comprenant un module de surveillance (36) et/ou un contrôleur (28) et des données d'image étant associées au dispositif d'affichage (22), **caractérisé en ce que**
**en ce que** les données d'image sont réparties en au moins deux groupes en fonction d'une valeur de couleur des données d'image, toutes les données d'image ayant une valeur de couleur maximale étant attribuées à un premier groupe (50) de données d'image et toutes les données d'image ayant une valeur de couleur comprise entre une première limite prédéfinie d'une valeur de couleur maximale et une deuxième limite prédéfinie d'un seuil d'une valeur de couleur étant attribuées à un deuxième groupe (52) de données d'image,
**en ce que** le module de surveillance (36) et/ou le contrôleur (28) est conçu pour déterminer, à partir des données d'image d'au moins un groupe, une valeur de contrôle pour le groupe respectif,
**en ce que** le module de surveillance (36) et/ou le contrôleur (28) est conçu pour comparer la valeur de contrôle déterminée d'un groupe avec une valeur de contrôle prédéfinie du groupe respectif,
**en ce que** le module de surveillance (36) et/ou le contrôleur (28) constate une validité des données d'image lorsque la valeur de contrôle déterminée du groupe respectif et la valeur de contrôle prédéfinie du groupe respectif concordent, et
**en ce que** le module de surveillance (36) et/ou le contrôleur (28) détermine une invalidité des données d'image lorsque la valeur de contrôle déterminée du groupe respectif et la valeur de contrôle prédéterminée du groupe respectif ne concordent pas.

12. Système d'affichage (26) ayant une unité de commande selon la revendication 11.
